# EUROPEAN PATENT SPECIFICATION

(11) **EP 4 481 609 B1**
(45) Date of publication and mention of the grant of the patent: **02.09.2026**
(21) Application number: 24198745.2
(22) Date of filing: 30.05.2018
(51) Int. Cl.: G06F 21/62, H04L 9/40, G06F 21/60, H04L 67/02, H04L 67/1097

(54) **CLOUD STORAGE USING ENCRYPTION GATEWAY WITH CERTIFICATE AUTHORITY IDENTIFICATION**
CLOUD-SPEICHER MIT VERSCHLÜSSELUNGSGATEWAY MIT ZERTIFIKATAUTORITÄTSIDENTIFIZIERUNG
STOCKAGE EN NUAGE UTILISANT UNE PASSERELLE DE CHIFFREMENT AVEC IDENTIFICATION D'AUTORITÉ DE CERTIFICATION

(30) Priority: 12.06.2017 US 201762518117 P; 28.08.2017 US 201715688743
(43) Date of publication of application: 25.12.2024
(62) Document number(s) of the earlier application(s) in accordance with Art. 76 EPC: 18816604.5 / 3 613 195
(73) Proprietor: Secturion Systems, Inc., Centerville, UT 84014 (US)
(72) Inventor: ANDERSON,, Jordan, Centerville, 84014 (US); TAKAHASHI, Richard J., Layton, 84040 (US); LITTLE, Sean, North Salt Lake, 84054 (US); NOEHRING, Lee, Peoria, 85383 (US)
(74) Representative: Derry, Paul Stefan

(56) References cited:
- US-A1- 2014 195 798
- US-A1- 2017 085 372

## Description

### RELATED APPLICATIONS

This application claims priority to U.S. Non-Provisional Application Serial No. 15/688,743, filed August 28, 2017, entitled "CLOUD STORAGE USING ENCRYPTION GATEWAY WITH CERTIFICATE AUTHORITY IDENTIFICATION," by Anderson et al.

This application also claims priority to U.S. Provisional Application Serial No. 62/518,117, filed June 12, 2017, entitled "CERTIFICATE AUTHORITY IDENTIFICATION AND ENCRYPTION GATEWAY FOR SECURE REMOTE CLOUD STORAGE," by Anderson et al..

This application is related to U.S. Patent Application Serial No. 14/219,651, filed March 19, 2014, entitled "SECURE END-TO-END COMMUNICATION SYSTEM," by Richard J. Takahashi.

This application is related to U.S. Patent Application Serial No. 14/177,392, filed February 11, 2014, entitled "SECURITY DEVICE WITH PROGRAMMABLE SYSTOLIC-MATRIX CRYPTOGRAPHIC MODULE AND PROGRAMMABLE INPUT/OUTPUT INTERFACE," by Richard J. Takahashi.

### FIELD OF THE TECHNOLOGY

At least some embodiments disclosed herein relate to security processing or storage in general.

### BACKGROUND

Currently, remote cloud and server systems are protected by distributed software based encryption in which each client generates and handles cryptographic keys and encrypts its data before transmission. Distributed encryption (local client to remote server) adds extensive CPU overhead-computing to clients and allows a very wide attack vector. For example, adversaries can penetrate several clients at one time because each individual client uses a software-based encryption that insecurely stores the keys. The adversary illegally accesses (hacks) the client's machine and copies the cryptographic keys undetected. Also, the user of the client machine and the information technology network personnel are potential threats that can copy the cryptographic keys and sell/give to an adversary. A distributed encryption system with hundreds of clients increases the burden of support network personnel to protect the network from both external and internal attackers or threats. Additionally, software encryption is susceptible to malicious hacking and covert modifications.

US 2017/085372 discloses systems and methods to send or write data or file objects to a remote cloud storage or data server using an encryption gateway. In one embodiment, a communication system includes: an encryption gateway configured to receive TLS (or an equivalent security) encrypted data in a payload from a client application, to terminate the client TLS connection, and to extract the payload and encrypt the payload data with keys from the key manager. The encryption gateway establishes a TLS connection and inserts the encrypted-authenticated data into the TLS payload and sends or writes the TLS encrypted data to a remote cloud storage or data server for storage. The system further includes a key manager configured to provide at least one key to the encryption gateway for encryption of the data in the payload.

### SUMMARY OF THE DESCRIPTION

The claims define the matter for protection.

Systems and methods to send or write data or a file object to a remote cloud storage or data server using a centralized encryption gateway are described herein. Some embodiments are summarized in this section.

One embodiment replaces a distributed encryption solution for data object storage with a centralized encryption solution, which is more reliable, secure, and manageable and in many cases provides much higher performance.

In one embodiment, a centralized encryption system and centralized key manager is significantly easier to manage and protect than a distributed encryption/key manager system.

In one embodiment, a payload encryption method uses symmetric encryption algorithms with authentication to encrypt or decrypt a payload file object or data. The gateway encrypts the payload (file object or data) using a specific key associated to the client and/or object. The gateway then encrypts the payload to a remote-side transport encryption protocol and sends the encrypted payload to a remote server or cloud server.

Disclosed but not the subject of the claims is a system that includes: a first computing device configured as an encryption gateway, the first computing device comprising at least one processor (e.g., for data path and/or cryptographic processing) and at least one memory, the encryption gateway configured to receive data in a payload from a client application (e.g., the client application can be implemented in either hardware or software), to encrypt the data, and to send or write the encrypted data to a remote cloud storage or a data server; a router or switch, configured to provide, via local-side transport, the payload from the client application to the encryption gateway; and a key manager, the key manager configured to provide at least one key to the encryption gateway for encryption of the data in the payload, wherein at least one key is associated to the client application (or the corresponding client) or the payload, and the encryption of the data uses a remote-side transport protocol associated with the remote cloud storage or server.

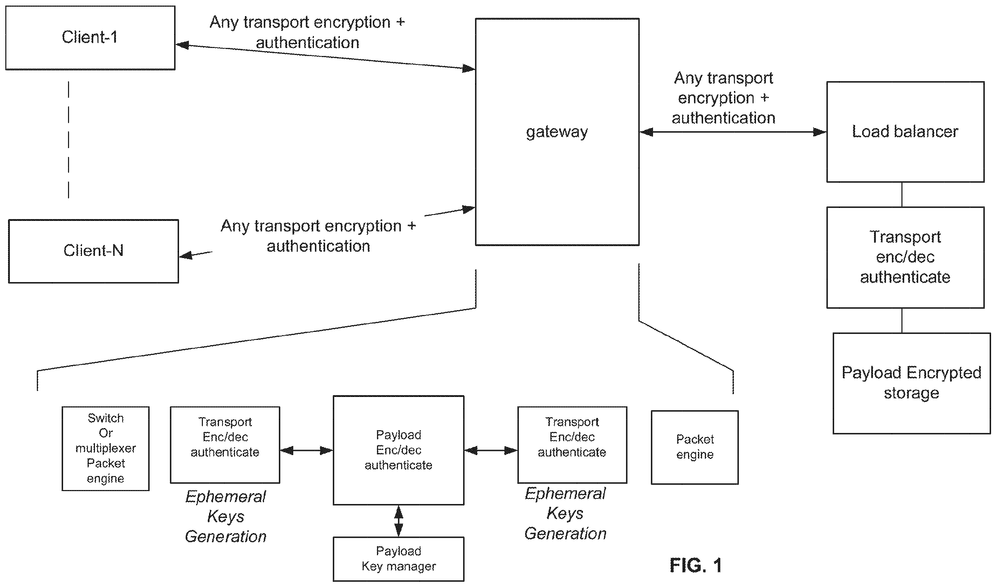

Disclosed but not the subject of the claims is a method that includes: receiving, by an encryption gateway from a hardware or software client application, a request to read data from a remote cloud storage or server; receiving the data in a first payload from the remote cloud storage or server, wherein the data has been encrypted using a remote-side transport protocol associated with the remote cloud storage or data server; decrypting, by at least one processor of the encryption gateway, the received data in the first payload using the remote-side transport protocol, wherein the decrypting uses a key of the client application and the key is retrieved from a memory; encrypting, by the encryption gateway, the first payload using a client-side transport protocol; and sending, from the encryption gateway to the client application, the encrypted first payload (for a non-limiting example, see **Figure 1****).**

In one embodiment, an encryption gateway includes at least one processor; and memory storing instructions configured to instruct at least one processor to: receive, via local-side transport, data in a payload from a client application; receive, from a key manager, at least one key for encryption of the data in the payload, wherein at least one key is associated to the client application or the payload; encrypt the data in the payload, the encryption using a remote-side transport protocol associated with a remote cloud storage or server; and send or write the encrypted data to the remote cloud storage or server.

The disclosure includes methods and apparatuses which perform these methods, including data processing systems which perform these methods, and computer readable media containing instructions which when executed on data processing systems cause the systems to perform these methods.

In one embodiment, when connecting to the cloud or remote server, the encryption gateway uses a trusted third party to verify the identity of the cloud or remote server. In the case of Transport Layer Security (TLS) or an equivalent network or transport security protocol, this trusted third party may be a certificate authority (CA) (e.g., a computing device of the CA communicates over a network with the encryption gateway).

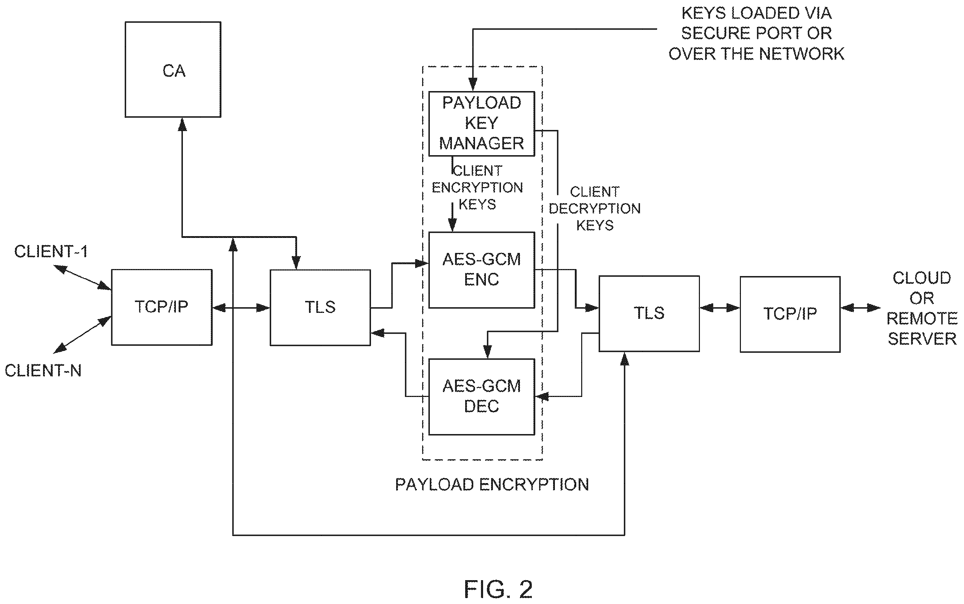

An example of a CA is illustrated in **Figure 2****.** In one embodiment, the TLS processors (e.g., the TLS blocks illustrated in **Figure 2****)** or TLS functions contact the CA (e.g., over the internet or a network connected to the CA) that signed a TLS peer certificate to verify that the certificate is valid. More than one certificate can be used. Once the one or more certificates are verified, the TLS connection to the client and to the cloud is established, and the client session key and cloud session key are generated per the TLS protocols. In the case that the certificate is deemed invalid, the connection is aborted and client or cloud session keys are not generated.

In one embodiment, the CA cryptographically signs a certificate that establishes the identity of the cloud or remote server. For example, the certificate is sent over the network from the computing device of the CA to the encryption gateway. The encryption gateway verifies this signature and communicates with the CA to ensure that the certificate is valid and has not been compromised.

Other features will be apparent from the accompanying drawings and from the detailed description which follows.

### BRIEF DESCRIPTION OF THE DRAWINGS

The embodiments are illustrated by way of example and not limitation in the figures of the accompanying drawings in which like references indicate similar elements.
Figure 1 shows a top level diagram of a communication system in one embodiment.
Figure 2 shows detailed TLS (HTTPS) implementation details of one embodiment.
Figure 3 shows detailed TLS (HTTPS)/MACSEC implementation details of one embodiment.
Figure 4 shows detailed MACSEC implementation details of one embodiment.
Figure 5 shows clients and servers using TLS (HTTPS) connections in one embodiment.
Figure 6 shows a TLS (HTTPS) proxy data flow in one embodiment.
Figure 7 shows clients using HTTP and server using TLS (HTTPS) in one embodiment.
Figure 8 shows HTTP client to TLS (HTTPS) server proxy connection data flow in one embodiment.
Figure 9 shows persistent TLS (HTTPS) connections to server in one embodiment.

### DESCRIPTION

The following description and drawings are illustrative and are not to be construed as limiting. Numerous specific details are described to provide a thorough understanding. However, in certain instances, well known or conventional details are not described in order to avoid obscuring the description. References to "one embodiment" or "an embodiment" in the present disclosure are not necessarily references to the same embodiment; and, such references mean at least one.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Described below is a client(s) to cloud or remote server secure communication system that connects from the clients to the gateway to the cloud and/or any remote servers. In one embodiment, the data is double encrypted in transit at 10 Gigabits to 100 Gigabits/second or higher data rates.

As used herein, "HTTPS" is equivalent to HTTP over TLS or SSL (or another equivalent security).

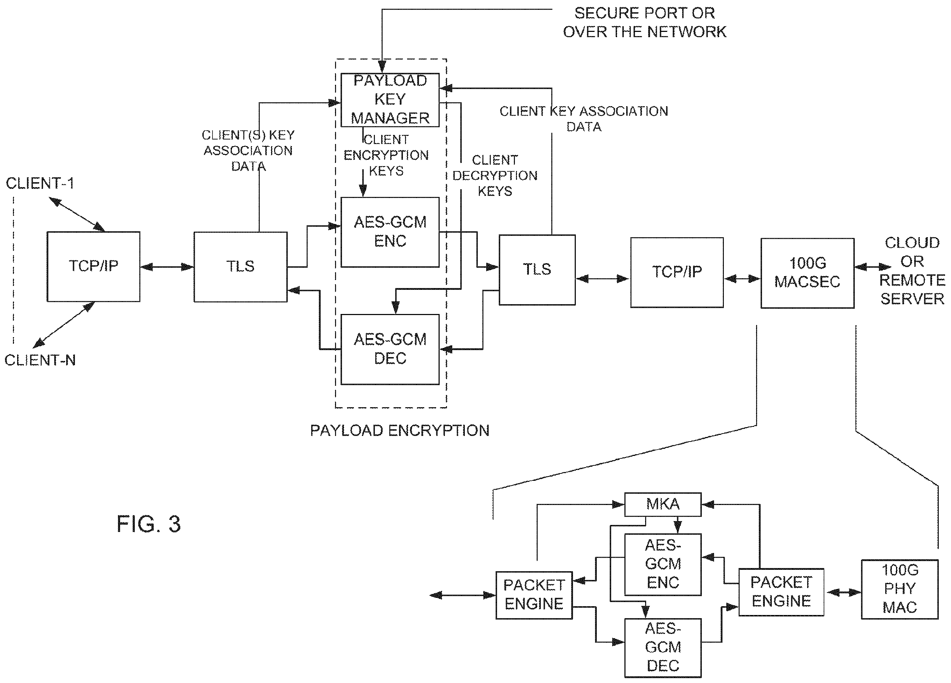

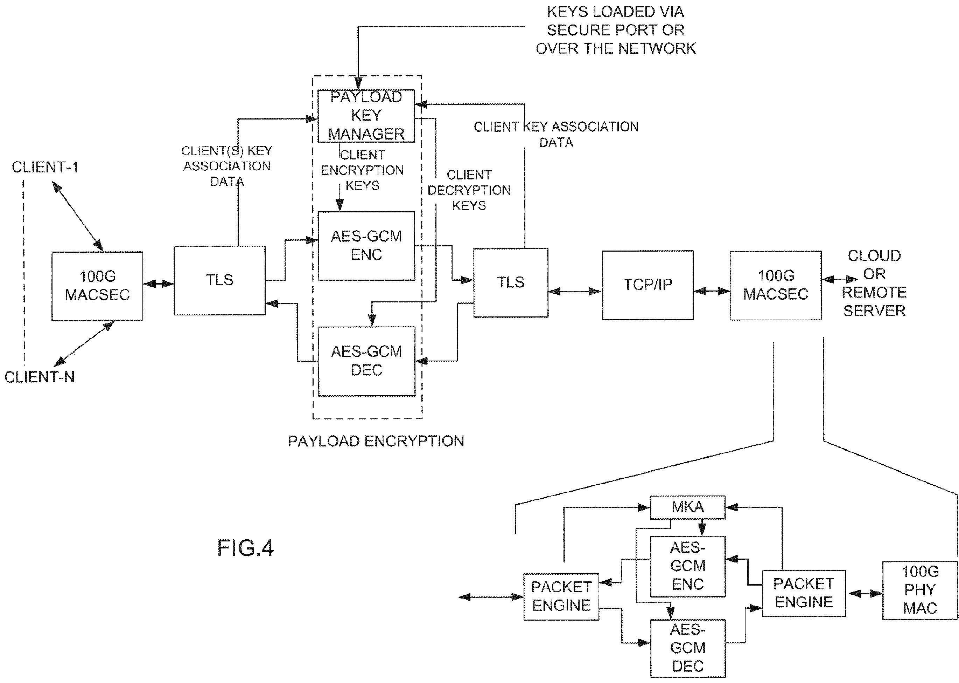

**Figures 1-4** show example embodiments of the communication system. **Figure 1** illustrates an example of the communication system in situ. **Figure** 2 illustrates an embodiment of the system with TLS transport security on both local and remote sides of the system. **Figure** 3 illustrates an embodiment of the system with TLS transport security on local side and MACSEC transport security on the remote side of the system. **Figure** 4 illustrates an embodiment of the system with MACSEC transport security on both local and remote sides of the system.

In some embodiments, as illustrated in **Figures 3** **and** **4****,** MACSEC security is used. MACSEC is described by the IEEE 802.1AE-2006 standard (currently with 3 amendments, IEEE 802.1AEbn-2011, IEEE 802.1AEbw-2013, IEEE 802.1AEcg-2017). The MAC security standard (also known as "MACsec") defines connectionless data confidentiality and integrity for media access independent protocols over an OSI layer two network. The MACsec Key Agreement ("MKA") protocol is responsible for maintaining MACsec connections by generating and providing cryptographic keys to be used for each MACSEC connection. The optional addition of MACSEC adds another layer of transport encryption for cloud-based encryption to completely hide all information being transmitted. Without MACSEC, the TLS encryption still keeps certain data fields in the clear (this is needed information for the TLS protocol to operate). By adding MACSEC security, all of the information transmitted is completed encrypted. Also, in alternative embodiments, MACSEC can be used to provide transport encryption instead of TLS.

### Data flow:

In one embodiment, a local client sends or writes data to the cloud or remote server flow. The client uses any transport encryption method on the file object or data to the gateway. The gateway decrypts the local-side transport to yield the plain text file object or data. The gateway encrypts the payload (file object or data) using a specific key associated to the client and/or object. The gateway then encrypts the payload to the remote-side transport encryption protocol and sends to the remote server or cloud server. The remote server or cloud server decrypts the transport protocol. At this time, the payload is still encrypted by the client's key. The encrypted payload data is then stored. The aggregated gateway terminates local side communication (e.g., MACSEC, IPSEC, TLS), performs encryption as required on the TCP stream of data (e.g., encrypt a file object in a file transfer stream), and then performs new independent transport encryption (e.g., TCP and TLS sessions) on the remote side.

In one embodiment, data is read or the local client receives data from the cloud or remote server. The client requests that the remote server or cloud server reads the encrypted stored data. The remote server or cloud server encrypts the data using remote-side transport protocol. The gateway receives the data and decrypts the remote-side transport protocol. Next, using the client's key, the gateway decrypts the payload file object or data and then encrypts the file object or data using the client-side transport protocol. The client receives the transport data and decrypts. The aggregated gateway terminates remote side communication (e.g., TCP and TLS sessions), performs decryption as required on the TCP stream of data (e.g., encrypt a file object in a file transfer stream), and then performs new independent transport encryption (e.g., MACSEC, IPSEC, TLS) on the local side.

### Transport Encryption:

In one embodiment, the transport encryption method is used to protect the data during transmission between physical sites or buildings (i.e., point-to-point encryption). The transport encryption method can be, for example, an industry standard such as, for example, TLS (Transport Security Layer), IPSec (Internet Protocol Security), MACSEC (IEEE MAC Security standard), or any custom transport protocol.
In one embodiment, TLS, MACSEC, and IPSec each have authentication information that will be used to associate the client's payload keys. A Transport Layer Security (TLS) or equivalent network or transport security protocol may communicate to a third party certificate authority (CA) for certificate(s) set-ups and to verify the identity of the cloud or remote server or users.

### Payload encryption:

In one embodiment, the payload encryption method uses symmetric encryption algorithms with authentication (e.g., AES-GCM) to encrypt or decrypt the payload file object or data. In alternative embodiments, other encryption algorithms can be used, such as an asymmetric algorithm. Payload encryption protects the file or object data while it is stored in cloud storage or at the cloud or remote server. Adding authentication ensures that the data has not been manipulated in any way while it has been stored. In addition, the payload encryption provides additional security above and beyond the transport encryption while the data is in transport. Encryption while the data is stored ensures that only the client can access the data. Other entities, such as the storage provider, cannot access, for example, the plaintext data because they do not have keys for that data.

In one embodiment, the symmetric encryption algorithm with authentication is required to associate the proper client's payload key to the file object or data. The payload key manager facilitates the loading of client payload keys into the gateway. The client keys can be either loaded via a secure port or over the network using a secure method. Once the keys are loaded into the gateway, the keys are pre-associated to the clients that are connected to the gateway. The client's key is associated to the client based on the information provided by the transport encryption method. Once the client keys are loaded into the gateway, the client's keys cannot be read or exposed.

The payload key manager (e.g., illustrated in **Figure 2****)** communicates with a payload encryption protocol to determine who the client is and what client payload key to associate with the file object or data for payload encryption or decryption. One of the features is the ability to encrypt the payload data at the file object level and associate the client's payload key to the file object.

Some advantages for various embodiments of the above: Implementing this disclosure in hardware using FPGAs or ASIC for, for example, 10 Gigabits to 100 Gigabits/second or higher data rates provides reliability against external attacks on the encryption system. Centralized encryption simplifies user management of site-wide data encryption. High-rate encryption enables remote storage without detriment to user experience. In one embodiment, a cipher or encryption algorithm for the foregoing can be implemented using a systolic matrix architecture as referred to below.

### Additional Encryption Gateway Embodiments

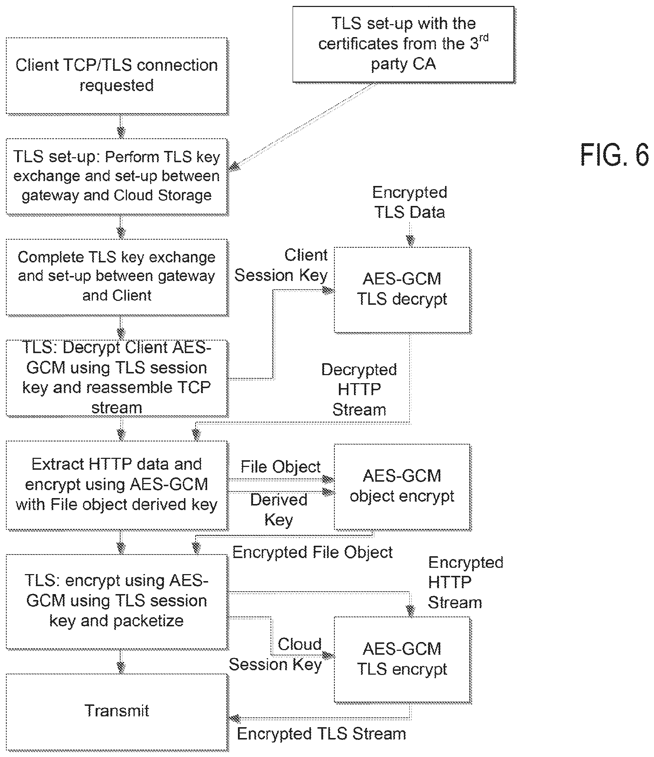

In one embodiment, a first computing device is configured as an encryption gateway, and the first computing device comprises at least one processor (e.g., for data path and/or cryptographic processing) and at least one memory. The encryption gateway is configured to authenticate a client using one or multiple authentication factors, and further configured to receive TLS (or other transport encryption) data from a client application. The encryption gateway will terminate the client TLS connection and extract the payload and encrypt the payload with authentication. Authentication is used in addition to the encryption algorithm to authenticate the data. The authentication process verifies the data originated from the intended source. For example, AES-GCM is an encryption algorithm that includes authentication performed prior to and after an encryption process. This authentication verifies the data that was encrypted or decrypted did originate to/from an authorized source or user. The payload is encrypted using the object/file key (e.g., see "File object derived key" in **Figure 6****).** This encryption protects the data while it is stored. The payload is also authenticated so that when the object/file is read from the data store, the gateway can determine if the data was modified in any way including, for example, being tampered with.

Next, the encryption gateway inserts the encrypted-authenticated payload into the cloud or data server TLS data packet/format. The encryption gateway establishes a cloud or data server TLS connection. The cloud or data server terminates the TLS connection, which includes TCP termination, and stores the encrypted-authenticated payload in the cloud or data server memory.

In one embodiment, an approach terminates a client TLS connection which also includes TCP termination, extracts data from a payload and encrypts the extracted data with authentication (using an encryption key from a key manager). A TLS connection is set-up to a cloud or data server, and the encrypted authenticated data is inserted into a TLS cloud payload with key association information. The cloud or data server terminates the TLS connection and the encrypted authenticated payload data is stored on the cloud or data server memory/storage.

This section below describes embodiments regarding a design of a, for example, 100 Gbps (gigabit per second)-full duplex link that uses both data-at-rest encryption and full TLS transport security. The design is not limited to TLS and Cloud Services file encryption, and this description is an example and discussion of the tradeoffs of a single embodiment of the general design. In one embodiment, the TLS algorithm can be implemented using a systolic matrix architecture as referred to below.

TLS background (used in this example) and other transport encryption methods are, for example, IPSEC, MACSEC, or a custom method. In one embodiment, the transport and packet processing can be implemented using a systolic matrix architecture as referred to below.

In one embodiment, Transport Layer Security (TLS) or Secure Socket Layer (SSL) is used to secure data in flight at Layer 6 of the OSI model. It provides both certificate authentication and transport encryption for all application layer data. Certificate authentication is achieved by verifying the CA's cryptographic signature covering the certificate, and/or contacting the CA to ensure that the certificate in question is currently valid. In the context of remote cloud storage, TLS gives the client confidence that its data is only connected to the cloud service provider.

TLS operates by negotiating a session key per TLS or Secure Socket Layer (SSL) connection. A single TLS connection is not a burden, but as the number of TLS connections that are negotiated within a device increases, the connections become increasingly burdensome in both computational requirements and real-time delay.

### IN-LINE ENCRYPTION

### OPTION 1: CLIENTS AND SERVERS USE HTTPS CONNECTIONS

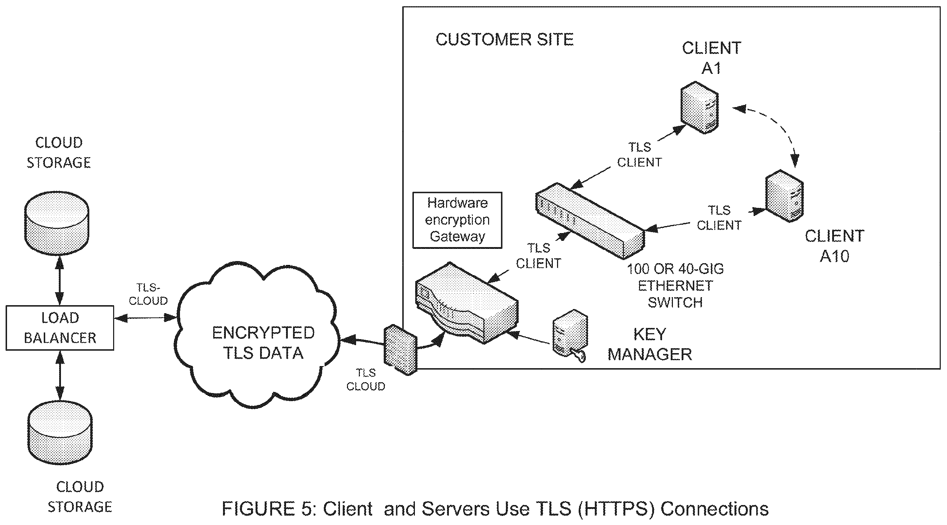

In order to encrypt the HTTP information in-line, the hardware encryption gateway acts as a TLS proxy between client applications and cloud storage as shown in **Figure 5****.**

**Figure 6** shows a flow chart describing the process of decrypting and re-encrypting the TLS connections.

The encryption gateway negotiates a TLS connection to the client and a TLS connection to the cloud server. In one embodiment, part of this negotiation includes exchange of signed certificates. Typically, the gateway provides a certificate to the client, verifying the gateway's identity (but the client does not need to prove its identity to the gateway or the remote server). So, a certificate is not necessarily received by the gateway from the client.

In alternative embodiments, the TLS exchange may start by or include the gateway receiving a certificate from the client. For example, TLS exchanges can implement (and TLS allows for) clients to provide the gateway with a certificate.

The TLS endpoint contacts the CA to verify that the received certificate is valid. In one embodiment, there are two independent TLS exchanges and connections that take place: one TLS exchange between the client and gateway, and another TLS exchange between the server and gateway. So, the gateway provides two TLS endpoints, one on the cloud server side, and one on the client side.

If the CA does not indicate that the certificate is valid, the negotiation is aborted. If the CA indicates the certificate is valid, the TLS protocol will establish the session key and encrypt the data with the session key and transmit the encrypted data to the client and/or cloud server, thus establishing a secure connection.

Before encrypting the file object for data-at-rest, the client TLS encryption will be decrypted using the client session key. In one embodiment, the HTTP data of **Figure 6** contains a file header, which contains information that is used to create the payload encryption key, which is derived using a key encryption key (KEK). For example, the "Derived key" shown in **Figure 6** is the payload encryption key. The file header information stays with the file/object while it is stored and will be available when the file/object is read. When the file/object is read, the file header information is then used to derive the same key (using the KEK) to decrypt the data.

In one embodiment, the file header information is prepended to the file/object. It is not encrypted and provides information which allows the gateway to derive the payload encryption key.

The file object will be encrypted using a key derived from the file object metadata (e.g., an Object ID). After encrypting the file object, the HTTP stream will be TLS encrypted for transport to the cloud server using the cloud session key.

This "Option 1" approach allows both cloud servers and client applications to continue operating transparently, provided the proxy (Hardware Encryption Gateway) is able to provide a valid cloud certificate to the client. In one embodiment, the cloud server provides the gateway with a signed certificate. The gateway must present a separate certificate, optionally signed by a different signing authority. In one embodiment, the proxy cloud certificate is signed by a CA that is trusted by the client so that the client trusts the proxy certificate that is present in place of the original cloud server certificate.

There are two basic CA types: an actual third party CA or a private CA created by the client. Either type is acceptable as long as the CA is trusted by the client and/or cloud server.

If the proxy does not have a valid certificate for the cloud domain, the clients would need to accept the proxy certificate as a security exception.

The cost of Hardware Encryption Gateway using TLS for both the client and the cloud server is that the number of TLS negotiations required has doubled compared to not using a proxy. This can reduce throughput performance for clients due to added TLS negotiation time, especially for small-sized files. This also puts a heavy burden on the proxy (Hardware Encryption Gateway) because it must deal with the aggregate client TLS sessions.

### OPTION 2: CLIENTS USE HTTP, CLOUD STORAGE USES HTTPS

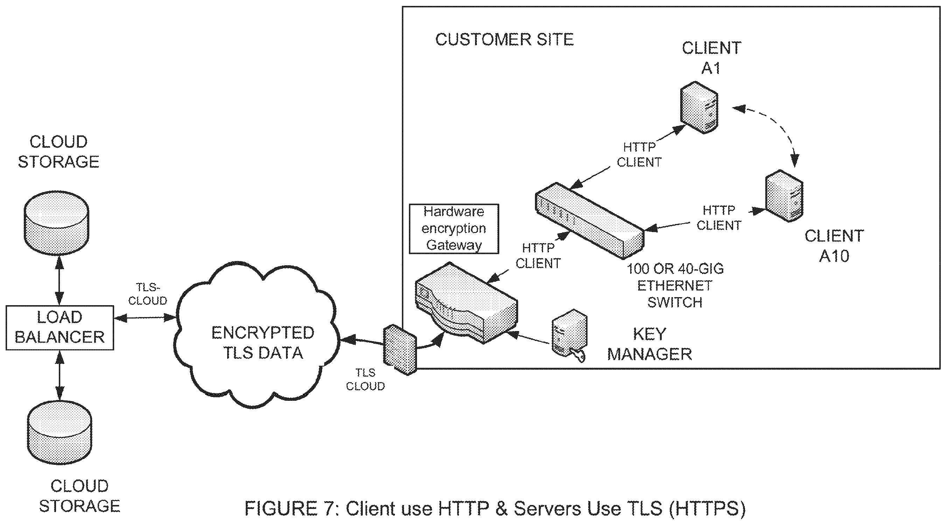

In order to reduce the performance impact of the insertion of the TLS proxy (Hardware Encryption Gateway) and ease the burden on the proxy, we can attempt to reduce the number of TLS connections in the system. One way of doing this is to modify the client connection to use an unencrypted HTTP connection. Because all client-to-proxy connections are contained within the customer site, this is a low risk change to the internal network security as shown in **Figure 7****.**

Because the clients are modified to communicate using HTTP only, Hardware Encryption Gateway would act as a client-only TLS proxy. Hardware Encryption Gateway will modify the client HTTP packets to the HTTPS. This will reduce the number of TLS negotiations in half from the full HTTPS option, and will remove a level of decryption in client-to-proxy traffic and a level of encryption in the proxy-to-client traffic, relieving both client and proxy of that computational burden. Note that this solution may require a change to the client side software.

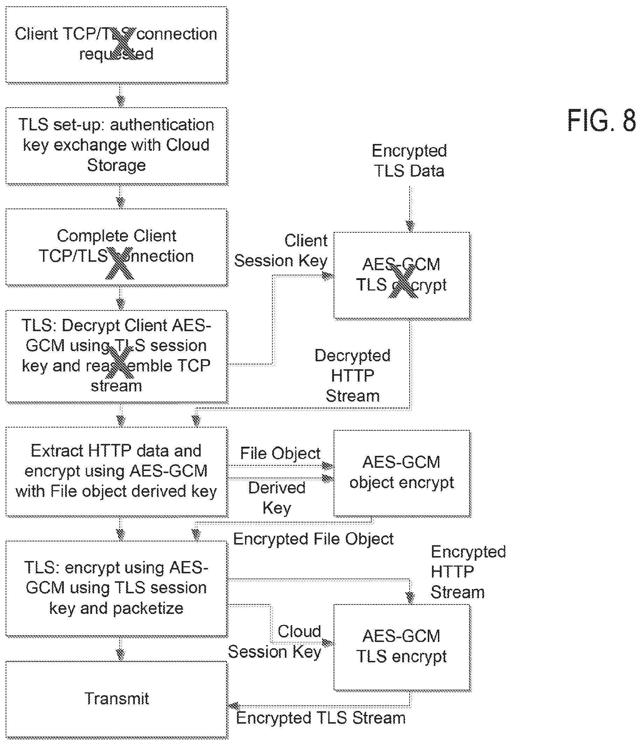

An illustration of the steps saved by removing encryption to the client is in **Figure 8****.**

### OPTION 3: PROXY TO SERVER OPTIMIZATION

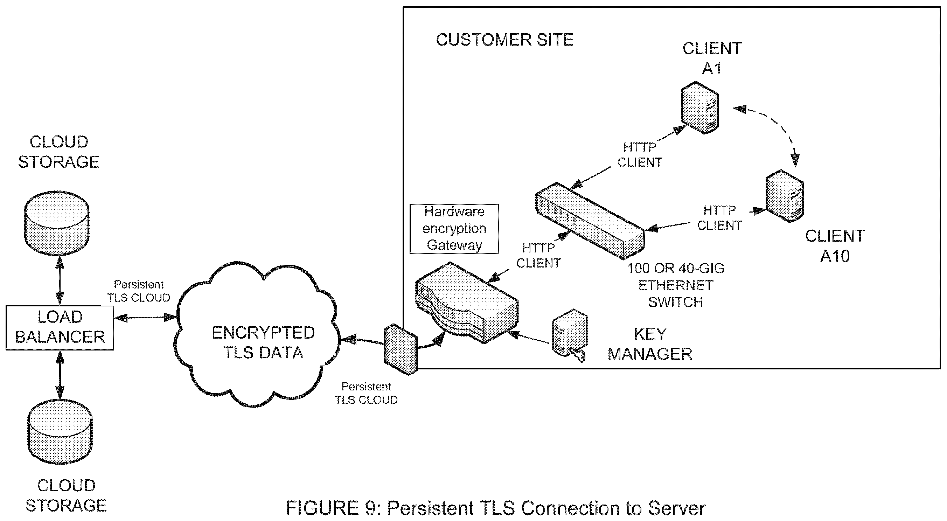

Option 3 outlines potential performance optimizations that could reduce the number of TLS negotiations that are needed between cloud server and proxy from the direct-connect HTTPS network used in both Options 1 and 2. In this optimization, the TLS proxy (Hardware Encryption Gateway) opens and maintains persistent TLS connections to the cloud servers and tunnels the various client connections through those tunnels as shown in **Figure 9****.**

Hardware Encryption Gateway would set up TLS sessions with a cloud server before clients initiate any data transfer. As clients move data to/from the cloud servers, Hardware Encryption Gateway would use a pre-opened TLS session for the client, modifying the client IP address and port number to that of the active TLS session.

In addition, for client-to-server traffic, Hardware Encryption Gateway would insert a TLS header, modify the server TCP port number to HTTPS, and perform all the necessary TLS encryption and authentication. For server-to-client traffic, Hardware Encryption Gateway would reverse the process described above. In one embodiment, there is a need to determine the duration the TLS sessions can be kept alive before the link would need to be renegotiated, as well as on potential impact on the cloud Load Balancers.

This option can be used in combination with either Option 1 or Option 2. In either case, it would reduce the number of proxy-to-server TLS sessions required especially in the case of many short-lived client connections. This option also disassociates the lag of proxy-to-server connections from the client-to-proxy connections so that the client does not see additional latency in individual client connections.

In various embodiments, a general hardware aggregated encryption gateway (as discussed above) enables centralized encryption of communications leaving a corporate or other site. In one embodiment, the above Hardware Encryption Gateway can negotiate hundreds of TLS connections per second and maintain thousands of TCP connections simultaneously. In one embodiment, the Hardware Encryption Gateway is programmable for real-time HTTP 100 Gbps full duplex TLS and data at rest encryption that is transparent to clients and the cloud.

In some embodiments, the encryption gateway may be implemented by or use encryption/decryption and/or communication methods and systems as described in U.S. Patent Application Serial No. 14/177,392, filed February 11, 2014, entitled "SECURITY DEVICE WITH PROGRAMMABLE SYSTOLIC-MATRIX CRYPTOGRAPHIC MODULE AND PROGRAMMABLE INPUT/OUTPUT INTERFACE," by Richard J. Takahashi, and/or as described in U.S. Patent Application Serial No. 14/219,651, filed March 19, 2014, entitled "SECURE END-TO-END COMMUNICATION SYSTEM," by Richard J. Takahashi. For example, the encryption gateway may use systolic matrix packet engines and multiplexers to process and route packets or other data, as described in the foregoing applications.

In one embodiment, data transmitted from a client to a remote cloud storage or server for storage is encrypted using three different keys, described in more detail as follows. The first key (key-1) is set-up with, for example, TLS encryption from the client application to the encryption gateway. The second key is the payload encryption key (key-2) used to encrypt the payload data (e.g., a file, or one or more file objects). The third key (key-3) is used for the TLS encryption from the encryption gateway to the remote cloud storage or server.

In this embodiment, key-1 is used to decrypt data from the client that is received at the gateway, and key-3 is used to encrypt data that is sent to the cloud. Also, key-1 is used as the TLS client session key. Data is only protected by key-1 for the duration of the transport between the client and the gateway. Key-3 is used similarly for the duration of the transport between the gateway and the remote cloud storage or server.

In one embodiment, data is encrypted by the encryption gateway at a file or file object level, and at least one key is associated to a file object. Examples of an executable file include a complete program that can be run directly by an operating system (e.g., in conjunction with shared libraries and system calls). The file generally contains a table of contents, a number of code blocks and data blocks, ancillary data such as the memory addresses at which different blocks should be loaded, which shared libraries are needed, the entry point address, and sometimes a symbol table for debugging. An operating system can run an executable file by loading blocks of code and data into memory at the indicated addresses and jumping to it.

Examples of a file object include code that is logically divided into multiple source files. Each source file is compiled independently into a corresponding object file of partially-formed machine code known as object code. At a later time these object files are linked together to form an executable file. Object files have several features in common with executable files (table of contents, blocks of machine instructions and data, and debugging information). However, the code is not ready to run. For example, it has incomplete references to subroutines outside itself, and as such, many of the machine instructions have only placeholder addresses.

In one embodiment, the encryption gateway sets up a transport session with the remote cloud storage or server prior to receiving the payload from the client (e.g., from an application executing on the client), and the encryption gateway uses the transport session for sending or writing data from a plurality of client applications, including the client application, to the remote cloud storage or server.

In one embodiment, the encryption gateway modifies or inserts a header in a transport connection to associate the client application on a remote connection, or the encryption gateway modifies or inserts a header in a file object to associate the client application on a remote connection.

In one embodiment, the client application can be software that transfers the file or file object to the gateway. In one embodiment, the header is an HTTP packet header that contains the information related to the packet, where the gateway can modify or insert information without disturbing or disrupting the original function of the HTTP packet.

In one embodiment, the data received from the client comprises a payload having a plurality of file objects, and the payload key is associated to each of the file objects. The payload key can be derived using metadata or file header information, as was described above. In either case, the metadata or file header contains information that is used to derive the payload cipher key with a KEK. The metadata or file header is maintained with the file/object for the life of the file/object so that it can be used at any time to derive the payload cipher key to decrypt the file/object (e.g., when it is read from remote cloud storage).

In one embodiment, the data received from the client comprises packets including a first packet, and a header is inserted into one or more of the packets (e.g., the first packet), wherein the header associates each packet to the client. The file object may be split among multiple packets. In the first packet of a file, identifying information is stored that is used to extract the correct key for decryption when the file is later read (this provides key association with the data). This identifying information can be in the form of an additional header prepended to the file, or by modifying existing metadata. The inserted file header is a new header. If metadata is modified, new metadata is inserted in an existing header. In this embodiment, there is no association between the file header or metadata with the remote connection. Internally, the contents of the header/metadata of the first packet of the file creates a context that associates subsequent packets with the first packet.

In one embodiment, the payload key is associated to the client or an object in the data received from the client. The payload key association is made through an identifying feature of the cloud server protocol associated with the cloud or remote server. In Amazon Web Services (AWS), for example, a specific "bucket" (e.g., like a folder) can have a key associated with it. The key to use is identified based on that information and uses that association.

In one embodiment, the gateway receives authentication information from the client to request the local side TLS key using the TLS protocol.

In one embodiment, the gateway communicates with the remote-side transport protocol to determine the remote side TLS key for use in encryption. The TLS protocol is used to determine the key.

In one embodiment, the client session key is an ephemeral key generated after receiving, by the gateway, a request from the client to establish a connection. The cloud session key is an ephemeral key generated after receiving a request from the gateway to the cloud server to establish a connection. Both the client session and cloud session keys are generated in response to a request to the gateway for connection from the client.

In one embodiment, the gateway modifies or inserts a header in at least one of a plurality of packets received from the client to associate the client to a file object (e.g., the header is only inserted in a first packet of a multi-packet file/object).

### Closing

At least some aspects disclosed can be embodied, at least in part, in software. That is, the techniques may be carried out in a computer system or other data processing system in response to its processor(s), such as a microprocessor, executing sequences of instructions contained in a memory, such as ROM, volatile RAM, non-volatile memory, cache or a remote storage device.

In various embodiments, hardwired circuitry (e.g., one or more hardware processors or other computing devices) may be used in combination with software instructions to implement the techniques above (e.g., the communication system may be implemented using one or more computing devices). Thus, the techniques are neither limited to any specific combination of hardware circuitry and software nor to any particular source for the instructions executed by the data processing system.

In one embodiment, a computing device may be used that comprises an inter-connect (e.g., bus and system core logic), which interconnects a microprocessor(s) and a memory. The microprocessor is coupled to cache memory in one example.

The inter-connect interconnects the microprocessor(s) and the memory together and also interconnects them to a display controller and display device and to peripheral devices such as input/output (I/O) devices through an input/output controller(s). Typical I/O devices include mice, keyboards, modems, network interfaces, printers, scanners, video cameras and other devices which are well known in the art.

The inter-connect may include one or more buses connected to one another through various bridges, controllers and/or adapters. In one embodiment the I/O controller includes a USB (Universal Serial Bus) adapter for controlling USB peripherals, and/or an IEEE-1394 bus adapter for controlling IEEE-1394 peripherals.

The memory may include ROM (Read Only Memory), and volatile RAM (Random Access Memory) and non-volatile memory, such as hard drive, flash memory, etc.

Volatile RAM is typically implemented as dynamic RAM (DRAM) which requires power continually in order to refresh or maintain the data in the memory. Non-volatile memory is typically a magnetic hard drive, a magnetic optical drive, or an optical drive (e.g., a DVD RAM), or other type of memory system which maintains data even after power is removed from the system. The non-volatile memory may also be a random access memory.

The non-volatile memory can be a local device coupled directly to the rest of the components in the data processing system. A non-volatile memory that is remote from the system, such as a network storage device coupled to the data processing system through a network interface such as a modem or Ethernet interface, can also be used.

In one embodiment, a data processing system such as the computing device above is used to implement one or more of the following: an encryption gateway, a router, a switch, a key manager, a client application, cloud storage, a load balancer, and a firewall.

In one embodiment, a data processing system such as the computing device above is used to implement a user terminal, which may provide a user interface for control of a computing device. For example, a user interface may permit configuration of the encryption gateway. A user terminal may be in the form of a personal digital assistant (PDA), a cellular phone or other mobile device, a notebook computer or a personal desktop computer.

In some embodiments, one or more servers of the data processing system can be replaced with the service of a peer to peer network of a plurality of data processing systems, or a network of distributed computing systems. The peer to peer network, or a distributed computing system, can be collectively viewed as a server data processing system.

Embodiments of the disclosure can be implemented via the microprocessor(s) and/or the memory above. For example, the functionalities described can be partially implemented via hardware logic in the microprocessor(s) and partially using the instructions stored in the memory. Some embodiments are implemented using the microprocessor(s) without additional instructions stored in the memory. Some embodiments are implemented using the instructions stored in the memory for execution by one or more general purpose microprocessor(s). Thus, the disclosure is not limited to a specific configuration of hardware and/or software.

In this description, various functions and operations may be described as being performed by or caused by software code to simplify description. However, those skilled in the art will recognize what is meant by such expressions is that the functions result from execution of the code by a processor, such as a microprocessor. Alternatively, or in combination, the functions and operations can be implemented using special purpose circuitry, with or without software instructions, such as using an Application-Specific Integrated Circuit (ASIC) or a Field-Programmable Gate Array (FPGA). Embodiments can be implemented using hardwired circuitry without software instructions, or in combination with software instructions. Thus, the techniques are limited neither to any specific combination of hardware circuitry and software, nor to any particular source for the instructions executed by the data processing system.

While some embodiments can be implemented in fully functioning computers and computer systems, various embodiments are capable of being distributed as a computing product in a variety of forms and are capable of being applied regardless of the particular type of machine or computer-readable media used to actually effect the distribution.

At least some aspects disclosed can be embodied, at least in part, in software. That is, the techniques may be carried out in a computer system or other data processing system in response to its processor, such as a microprocessor, executing sequences of instructions contained in a memory, such as ROM, volatile RAM, non-volatile memory, cache or a remote storage device.

Hardware and/or software may be used to implement the embodiments above. The software may be a sequence of instructions referred to as "computer programs." The computer programs typically comprise one or more instructions set at various times in various memory and storage devices in a computer, and that, when read and executed by one or more processors in a computer, cause the computer to perform operations necessary to execute elements involving the various aspects.

Software used in an embodiment may be stored in a machine readable medium. The executable software, when executed by a data processing system, causes the system to perform various methods. The executable software and data may be stored in various places including for example ROM, volatile RAM, non-volatile memory and/or cache. Portions of this software and/or data may be stored in any one of these storage devices. Further, the data and instructions can be obtained from centralized servers or peer to peer networks. Different portions of the data and instructions can be obtained from different centralized servers and/or peer to peer networks at different times and in different communication sessions or in a same communication session. The data and instructions can be obtained in entirety prior to the execution of the applications. Alternatively, portions of the data and instructions can be obtained dynamically, just in time, when needed for execution. Thus, it is not required that the data and instructions be on a machine readable medium in entirety at a particular instance of time.

Examples of computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., Compact Disk Read-Only Memory (CD ROMS), Digital Versatile Disks (DVDs), etc.), among others. The computer-readable media may store the instructions.

In general, a tangible machine readable medium includes any mechanism that provides (e.g., stores) information in a form accessible by a machine (e.g., a computer, network device, personal digital assistant, manufacturing tool, any device with a set of one or more processors, etc.).

Although some of the drawings may illustrate a number of operations in a particular order, operations which are not order dependent may be reordered and other operations may be combined or broken out. While some reordering or other groupings are specifically mentioned, others will be apparent to those of ordinary skill in the art and so do not present an exhaustive list of alternatives. Moreover, it should be recognized that various stages or components could be implemented in hardware, firmware, software or any combination thereof.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the disclosure.

No claim element herein is to be construed under the provisions of 35 U.S.C. 112, sixth paragraph, unless the element is expressly recited using the phrase "means for."

In the foregoing specification, the disclosure has been described with reference to specific exemplary embodiments thereof. It will be evident that various modifications may be made thereto without departing from the scope of the following claims. The specification and drawings are, accordingly, to be regarded in an illustrative sense rather than a restrictive sense.

## Claims

1. A computing device configured as an encryption gateway configured to process data transmitted from a client to a remote cloud storage or server for storage that is encrypted using three different keys, the encryption gateway being configured to:
use a first key (key-1) to decrypt data from the client that is received at the gateway to yield payload data;
use a second, payload encryption key (key-2) to encrypt the payload data, wherein the payload encryption key is derived from metadata or file header information that is maintained with a file object of the payload data for a life of the file object; and
use a third key (key-3) to encrypt the encrypted payload data that is sent to the cloud storage or server.

2. The encryption gateway of claim 1, configured use the first key (key-1) as a TLS client session key.

3. The encryption gateway of claim 1 or claim 2, configured to use the third key only for the duration of the transport between the gateway and the remote cloud storage or server.

4. The encryption gateway of any preceding claim, configured to encrypt the data at a file or file object level, wherein at least one key is associated to a file object.

5. The encryption gateway of any preceding claim, configured to set up a transport session with the remote cloud storage or server prior to receiving the payload from the client, and to use the transport session for sending or writing data from a plurality of client applications to the remote cloud storage or server.

6. The encryption gateway of any preceding claim, configured to modify or insert a header in a transport connection to associate the client application on a remote connection.

7. The encryption gateway of any of claims 1 to 5, configured to modify or insert a header in a file object to associate the client application on a remote connection.

8. The encryption gateway of any preceding claim, wherein the data received from the client comprises a payload having a plurality of file objects, and the payload key is associated to each of the file objects.

9. The encryption gateway of claim 8, wherein a file object is split among multiple packets.

10. The encryption gateway of any preceding claim, configured to:
derive the payload key using file header information.

11. The encryption gateway of any preceding claim, wherein the data received from the client comprises packets including a first packet, the encryption gateway being configured to insert a header into one or more of the packets, wherein the header associates each packet to the client.

12. The encryption gateway of any preceding claim, configured to use stored identifying information to extract the correct key for decryption when the file is read, and optionally wherein the identifying information is in the form of: an additional header prepended to the file, or of modified metadata.

13. The encryption gateway of any preceding claim, wherein the payload key is associated to the client or an object in the data received from the client through an identifying feature of the cloud server protocol associated with the cloud or remote server.

14. The encryption gateway of any preceding claim, configured to:
receive authentication information from the client to request a local side TLS key using the TLS protocol, and /or
communicate with the remote-side transport protocol to determine a remote side TLS key for use in encryption using the TLS protocol.

15. A method performed by a computing device configured as an encryption gateway of processing data transmitted from a client to a remote cloud storage or server for storage that is encrypted using three different keys, the method comprising:
using a first key (key-1) to decrypt data from the client that is received at the gateway to yield payload data;
deriving a second, payload encryption key (key-2) from metadata that is maintained with a file object of the payload data for a life of the file object;
using the second, payload encryption key (key-2) to encrypt the payload data; and
using a third key (key-3) to encrypt the encrypted payload data that is sent to the cloud storage or server.

## Patentansprüche

1. Rechenvorrichtung, die als ein Verschlüsselungsgateway konfiguriert ist, das dazu konfiguriert ist, Daten zu verarbeiten, die von einem Client an einen entfernten Cloud-Speicher oder -Server übertragen werden, für Speicherung, die unter Verwendung von drei unterschiedlichen Schlüsseln verschlüsselt ist, wobei das Verschlüsselungsgateway zu Folgendem konfiguriert ist:
Verwenden eines ersten Schlüssels (Schlüssel-1), um Daten von dem Client zu entschlüsseln, die an dem Gateway empfangen werden, um Nutzlastdaten zu erzielen;
Verwenden eines zweiten, Nutzlastverschlüsselungsschlüssels (Schlüssel-2), um die Nutzlastdaten zu verschlüsseln, wobei der Nutzlastverschlüsselungsschlüssel von Metadaten oder Datei-Header-Informationen abgeleitet ist, die mit einem Dateiobjekt der Nutzlastdaten für eine Lebensdauer des Dateiobjekts beibehalten werden; und
Verwenden eines dritten Schlüssels (Schlüssel-3), um die verschlüsselten Nutzlastdaten zu verschlüsseln, die an den Cloud-Speicher oder -Server gesendet werden.

2. Verschlüsselungsgateway nach Anspruch 1, das dazu konfiguriert ist, den ersten Schlüssel (Schlüssel-1) als einen TLS-Client-Sitzungsschlüssel zu verwenden.

3. Verschlüsselungsgateway nach Anspruch 1 oder Anspruch 2, das dazu konfiguriert ist, den dritten Schlüssel nur für die Dauer des Transports zwischen dem Gateway und dem entfernten Cloud-Speicher oder -Server zu verwenden.

4. Verschlüsselungsgateway nach einem vorhergehenden Anspruch, das dazu konfiguriert ist, die Daten auf einer Datei- oder Dateiobjektebene zu verschlüsseln, wobei zumindest ein Schlüssel mit einem Dateiobjekt assoziiert ist.

5. Verschlüsselungsgateway nach einem vorhergehenden Anspruch, das dazu konfiguriert ist, eine Transportsitzung mit dem entfernten Cloud-Speicher oder -Server vor dem Empfangen der Nutzlast von dem Client einzurichten und die Transportsitzung zum Senden oder Schreiben von Daten von einer Vielzahl von Client-Anwendungen an den entfernten Cloud-Speicher oder -Server zu verwenden.

6. Verschlüsselungsgateway nach einem vorhergehenden Anspruch, das dazu konfiguriert ist, einen Header in einer Transportverbindung zu modifizieren oder einzufügen, um die Client-Anwendung an einer entfernten Verbindung zu assoziieren.

7. Verschlüsselungsgateway nach einem der Ansprüche 1 bis 5, das dazu konfiguriert ist, einen Header in einem Dateiobjekt zu modifizieren oder einzufügen, um die Client-Anwendung an einer entfernten Verbindung zu assoziieren.

8. Verschlüsselungsgateway nach einem vorhergehenden Anspruch, wobei die Daten, die von dem Client empfangen werden, eine Nutzlast mit einer Vielzahl von Dateiobjekten umfassen und der Nutzlastschlüssel mit jedem der Dateiobjekte assoziiert ist.

9. Verschlüsselungsgateway nach Anspruch 8, wobei ein Dateiobjekt unter mehreren Paketen aufgeteilt ist.

10. Verschlüsselungsgateway nach einem vorhergehenden Anspruch, das zu Folgendem konfiguriert ist:
Ableiten des Nutzlastschlüssels unter Verwendung von Datei-Header-Informationen.

11. Verschlüsselungsgateway nach einem vorhergehenden Anspruch, wobei die Daten, die von dem Client empfangen werden, Pakete umfassen, die ein erstes Paket beinhalten, wobei das Verschlüsselungsgateway dazu konfiguriert ist, einen Header in eines oder mehrere der Pakete einzufügen, wobei der Header jedes Paket mit dem Client assoziiert.

12. Verschlüsselungsgateway nach einem vorhergehenden Anspruch, das dazu konfiguriert ist, gespeicherte Identifizierungsinformationen zu verwenden, um den korrekten Schlüssel zur Entschlüsselung zu extrahieren, wenn die Datei gelesen wird, und wobei optional die Identifizierungsinformationen in der Form von Folgendem sind: einem zusätzlichen Header, welcher der Datei vorangestellt ist, oder von modifizierten Metadaten.

13. Verschlüsselungsgateway nach einem vorhergehenden Anspruch, wobei der Nutzlastschlüssel mit dem Client oder einem Objekt in den Daten, die von dem Client durch ein Identifizierungsmerkmal des Cloud-Server-Protokolls assoziiert mit der Cloud oder dem entfernten Server empfangen werden, assoziiert ist.

14. Verschlüsselungsgateway nach einem vorhergehenden Anspruch, das zu Folgendem konfiguriert ist:
Empfangen von Authentifizierungsinformationen von dem Client, um einen lokalen TLS-Schlüssel unter Verwendung des TLS-Protokolls anzufordern, und/oder
Kommunizieren mit dem Transportprotokoll auf der entfernten Seite, um einen TLS-Schlüssel auf der entfernten Seite zur Verwendung bei Verschlüsselung unter Verwendung des TLS-Protokolls zu bestimmen.

15. Verfahren, durchgeführt durch eine Rechenvorrichtung, die als ein Verschlüsselungsgateway zum Verarbeiten von Daten konfiguriert ist, die von einem Client an einen entfernten Cloud-Speicher oder -Server übertragen werden, für Speicherung, die unter Verwendung von drei unterschiedlichen Schlüsseln verschlüsselt ist, wobei das Verfahren Folgendes umfasst:
Verwenden eines ersten Schlüssels (Schlüssel-1), um Daten von dem Client zu entschlüsseln, die an dem Gateway empfangen werden, um Nutzlastdaten zu erzielen;
Ableiten eines zweiten, Nutzlastverschlüsselungsschlüssels (Schlüssel-2) aus Metadaten, die mit einem Dateiobjekt der Nutzlastdaten für eine Lebensdauer des Dateiobjekts beibehalten werden;
Verwenden des zweiten, Nutzlastverschlüsselungsschlüssels (Schlüssel-2), um die Nutzlastdaten zu verschlüsseln; und
Verwenden eines dritten Schlüssels (Schlüssel-3), um die verschlüsselten Nutzlastdaten zu verschlüsseln, die an den Cloud-Speicher oder -Server gesendet werden.

## Revendications

1. Dispositif informatique configuré comme une passerelle de chiffrement configurée pour traiter des données transmises en provenance d'un client à un stockage ou à un serveur en nuage distant pour un stockage qui est chiffré en utilisant trois clés différentes, la passerelle de chiffrement étant configurée pour :
utiliser une première clé (clé-1) pour déchiffrer des données en provenance du client qui sont reçues au niveau de la passerelle pour produire des données de charge utile ;
utiliser une deuxième clé (clé-2) de chiffrement de charge utile pour chiffrer les données de charge utile, dans lequel la clé de chiffrement de charge utile est dérivée de métadonnées ou d'informations d'en-tête de fichier qui sont conservées avec un objet fichier des données de charge utile pendant une durée de vie de l'objet fichier ; et
utiliser une troisième clé (clé-3) pour chiffrer les données de charge utile chiffrées qui sont envoyées au stockage ou au serveur en nuage.

2. Passerelle de chiffrement de la revendication 1, configurée pour utiliser la première clé (clé-1) en tant que clé de session client TLS.

3. Passerelle de chiffrement de la revendication 1 ou de la revendication 2, configurée pour utiliser la troisième clé uniquement pendant la durée du transport entre la passerelle et le stockage ou le serveur en nuage distant.

4. Passerelle de chiffrement d'une quelconque revendication précédente, configurée pour chiffrer les données à un niveau de fichier ou d'objet fichier, dans laquelle au moins une clé est associée à un objet fichier.

5. Passerelle de chiffrement d'une quelconque revendication précédente, configurée pour établir une session de transport avec le stockage ou le serveur en nuage distant avant de recevoir la charge utile en provenance du client, et pour utiliser la session de transport pour envoyer ou écrire des données en provenance d'une pluralité d'applications client au stockage ou au serveur en nuage distant.

6. Passerelle de chiffrement d'une quelconque revendication précédente, configurée pour modifier ou insérer un en-tête dans une connexion de transport pour associer l'application client sur une connexion distante.

7. Passerelle de chiffrement de l'une quelconque des revendications 1 à 5, configurée pour modifier ou insérer un en-tête dans un objet fichier pour associer l'application client sur une connexion distante.

8. Passerelle de chiffrement d'une quelconque revendication précédente, dans laquelle les données reçues en provenance du client comprennent une charge utile présentant une pluralité d'objets fichier, et la clé de charge utile est associée à chacun des objets fichier.

9. Passerelle de chiffrement de la revendication 8, dans laquelle un objet fichier est divisé entre plusieurs paquets.

10. Passerelle de chiffrement d'une quelconque revendication précédente, configurée pour :
dériver la clé de charge utile en utilisant des informations d'en-tête de fichier.

11. Passerelle de chiffrement d'une quelconque revendication précédente, dans laquelle les données reçues en provenance du client comprennent des paquets comprenant un premier paquet, la passerelle de chiffrement étant configurée pour insérer un en-tête dans un ou plusieurs des paquets, dans laquelle l'en-tête associe chaque paquet au client.

12. Passerelle de chiffrement d'une quelconque revendication précédente, configurée pour utiliser des informations d'identification stockées pour extraire la clé correcte pour le déchiffrement lorsque le fichier est lu, et éventuellement dans laquelle les informations d'identification sont sous la forme : d'un en-tête supplémentaire ajouté au fichier, ou de métadonnées modifiées.

13. Passerelle de chiffrement d'une quelconque revendication précédente, dans laquelle la clé de charge utile est associée au client ou à un objet dans les données reçues en provenance du client au travers d'une caractéristique d'identification du protocole de serveur en nuage associé au serveur en nuage ou distant.

14. Passerelle de chiffrement d'une quelconque revendication précédente, configurée pour :
recevoir des informations d'authentification en provenance du client pour demander une clé TLS côté local en utilisant le protocole TLS, et /ou
communiquer avec le protocole de transport côté distant pour déterminer une clé TLS côté distant à utiliser dans le chiffrement en utilisant protocole TLS.

15. Procédé réalisé par un dispositif informatique configuré comme une passerelle de chiffrement de données de traitement transmises en provenance d'un client à un stockage ou à un serveur en nuage distant pour un stockage chiffré en utilisant trois clés différentes, le procédé comprenant :
l'utilisation d'une première clé (clé-1) pour déchiffrer des données en provenance du client qui sont reçues au niveau de la passerelle pour produire des données de charge utile ;
la dérivation d'une deuxième clé de chiffrement de charge utile (clé-2) à partir de métadonnées qui sont conservées avec un objet fichier des données de charge utile pendant une durée de vie de l'objet fichier ;
l'utilisation de la deuxième clé de chiffrement de charge utile (clé-2) pour chiffrer les données de charge utile ; et
l'utilisation d'une troisième clé (clé-3) pour chiffrer les données de charge utile chiffrées qui sont envoyées au stockage ou au serveur en nuage.
